Europäisches Patentamt

European Patent Office

Office européen des brevets

(19)

(11) Numéro de publication : **0 040 122**
**B1**

(12) **FASCICULE DE BREVET EUROPÉEN**

(45) Date de publication du fascicule du brevet :
**15.08.84**

(51) Int. Cl.³ : **C 05 B   7/00, C 05 B 19/00**

(21) Numéro de dépôt : **81400642.5**

(22) Date de dépôt : **23.04.81**

(54) **Procédé de fabrication de produits sous forme de particules solides notamment d'engrais granulés NP/NPK contenant du phosphate d'ammonium.**

(30) Priorité : **05.05.80 FR 8009952**

(43) Date de publication de la demande :
**18.11.81 Bulletin 81/46**

(45) Mention de la délivrance du brevet :
**15.08.84 Bulletin 84/33**

(84) Etats contractants désignés :
**AT BE DE FR GB IT NL SE**

(56) Documents cités :
**DE-B- 1 051 871**
**FR-A- 1 100 817**
**FR-A- 1 389 361**
**FR-A- 1 573 849**
**FR-A- 2 437 386**
**US-A- 3 241 946**
**US-A- 3 310 371**
**US-A- 3 954 942**

(73) Titulaire : **Société GENERALE DES ENGRAIS S.A.
45-47, rue de Villiers
F-92527 Neuilly-sur-Seine (FR)**

(72) Inventeur : **Moraillon, Philippe
12, rue d'Hennemont
F-78100 Saint-Germain-en-Laye (FR)**

(74) Mandataire : **Rieux, Michel et al
C d F Chimie S.A. Service Propriété Industrielle Tour
Aurore - Cedex no. 5
F-92080 Paris la Défense 2 (FR)**

Jouve, 18, rue St-Denis, 75001 Paris, France

## Description

La présente invention a trait à un procédé de fabrication de produits sous forme de particules solides, notamment d'engrais granulés NP/NPK contenant des phosphates d'ammonium.

On a déjà décrit, et depuis longtemps, de nombreux procédés de granulation d'engrais à partir de matières premières liquides. Une méthode apparemment simple, consiste à effectuer la granulation et le séchage en une seule opération unitaire, comme par exemple dans les brevets français 1 100 817 et 1 351 668. Mais ce type de mise en œuvre présente certains inconvénients tels que : teneur en eau élevée de la bouillie, capacité de production limitée, impossibilité de fabriquer certaines formules, impossibilité d'injecter un complément d'ammoniac dans la phase solide humide.

Aussi s'est-on orienté vers des procédés de granulation en deux opérations séparées dans un mélangeur (ou granulateur) et un séchoir montés en série dans une même boucle de granulation.

Malheureusement lorsqu'on introduit dans le granulateur d'une installation classique de granulation une grande proportion des matières premières sous forme liquide (masse fondue, solution ou suspension aqueuse de substance fertilisante), il est nécessaire de recycler dans ce granulateur une quantité importante de la matière séchée en vue de réduire la teneur en humidité et la température de la matière contenue dans le granulateur à un niveau compatible avec une granulation efficace. Le recyclage nécessaire est généralement compris entre 5 et 12 fois la production.

Dans le brevet français 1 389 361, on a proposé d'obvier à cet inconvénient en pulvérisant dans le séchoir une partie des substances fertilisantes liquides, notamment une bouillie de phosphates monoammonique et diammonique. Le recyclage nécessaire de matière séchée est ainsi réduit à moins de 5 fois la production.

Mais ce procédé excellent dans son principe nécessite une installation pour la neutralisation de l'acide phosphorique par l'ammoniac, comportant par exemple une ou deux cuves agitées. La vapeur d'eau produite par la chaleur de réaction doit être séparée de la bouillie et évacuée par des moyens appropriés. Il faut également une pompe pour envoyer la bouillie sous pression vers le séchoir, un débimètre de bouillie, et un pulvérisateur pour introduire la bouillie dans le séchoir.

La bouillie doit être suffisamment fluide pour qu'on puisse la pomper et la pulvériser, ce qui exige une teneur en eau comprise entre 12 et 20 % selon le rapport atomique N : P dans le mélange de phosphates monoammonique et diammonique.

Lorsque ce rapport atomique est de 1,6 comme indiqué dans ledit brevet 1.389.361, il est connu que les pertes d'ammoniac lors de la neutralisation et lors du séchage sont élevées, de l'ordre de 10 à 20 % de l'ammoniac introduit. On peut récupérer cette perte dans un système de lavage des gaz approprié, au moyen d'acide phosphorique par exemple, mais pour que le liquide en circulation dans ce système de lavage reste suffisamment fluide, il faut introduire une quantité d'eau importante, proportionnelle à la quantité d'ammoniac à récupérer. Cela augmente les dimensions du séchoir et la dépense calorifique.

Dans la préparation des engrais, il est également connu d'utiliser un réacteur tubulaire pour réaliser le contact entre l'acide sulfurique ou phosphorique et l'ammoniac, et de séparer la vapeur d'eau engendrée de la bouillie produite dans un cyclone, comme cela est décrit dans le brevet des Etats-Unis n° 2 755 176, ou dans le brevet des Etats-Unis n° 3 310 371. Malheureusement, le séparateur cyclonique est sujet à des bouchages qui rendent l'opération difficile.

On a également proposé de fabriquer des engrais à base de phosphate et sulfate d'ammonium au moyen d'un réacteur tubulaire de neutralisation des acides débouchant directement dans le granulateur sans séparation préalable de la vapeur d'eau, comme décrit dans le brevet des Etats-Unis n° 3 954 942. Ce procédé convient probablement dans le cas de sels relativement peu solubles, comme le phosphate et le sulfate d'ammonium ; encore faut-il souvent, pour éviter un taux de recyclage excessif, introduire une partie du sulfate d'ammonium sous forme solide, ou une partie du P205 sous forme de superphosphate solide, comme cela apparaît d'après les exemples du brevet cité. Dans le cas où l'on incorpore dans l'engrais des substances très solubles à chaud, comme le nitrate d'ammonium ou l'urée, introduits dans le granulateur sous forme d'une solution, la projection directe sur le lit de produit de la vapeur d'eau engendrée par la chaleur de neutralisation des acides élève notablement la température et l'humidité du produit contenu dans le granulateur, et oblige à maintenir un recyclage élevé, compris généralement entre 6 et 10 fois la production, selon la formule fabriquée, et la teneur en eau des matières utilisées.

La présente invention permet de pallier ces inconvénients. Elle a pour objet de simplifier considérablement l'installation en supprimant les cuves de neutralisation de l'acide phosphorique par l'ammoniac, la séparation et l'évacuation de la vapeur d'eau produite, la pompe à bouillie, le débimètre de bouillie et le pulvérisateur de bouillie à l'entrée du séchoir.

Un autre objet de l'invention est la fabrication d'engrais NP ou NPK de matières premières azotées et phosphatées en totalité sous forme liquide, avec un taux de recyclage de matière séchée beaucoup plus faible que dans les procédés traditionnels, compris entre deux et cinq fois seulement la production.

Un autre objet de l'invention est de permettre la pulvérisation dans le séchoir d'une bouillie très concentrée, voire une masse fondue, contenant seulement 1 à 8 % d'eau, de réduire ainsi les dimensions du séchoir, et de diminuer, voire d'annuler, la dépense calorifique.

Un autre objet de l'invention est de réduire la perte d'ammoniac à récupérer dans le système de

2

**0 040 122**

lavage des gaz, ce qui va dans le même sens de simplification du matériel et d'économie calorifique.

Un autre objet de l'invention est de permettre la fabrication de phosphate diammonique granulé, avec un recyclage plus faible que dans les procédés existants.

La présente invention a trait à un procédé continu en deux stades pour la fabrication de produits sous forme de particules solides, notamment d'engrais granulés NP/NPK contenant des phosphates d'ammonium, dans lequel on réalise le premier stade en introduisant dans une première zone (1) des matières premières solides, du produit séché recyclé, des matières liquides et éventuellement un fluide ammoniacal, on transfère le produit solide humide divisé ainsi obtenu dans une deuxième zone (2) parcourue par un courant de gaz éventuellement chauffé où l'on réalise le deuxième stade et on introduit dans la zone (2) un jet d'une bouillie obtenue par réaction d'un liquide acide et d'un fluide ammoniacal, ledit procédé étant caractérisé par le fait que l'on réalise la réaction entre ledit liquide acide et ledit fluide ammoniacal par le moyen d'au moins un réacteur tubulaire (5) qui débouche dans la zone (2) de manière à projeter ledit mélange de bouillie et de vapeur d'eau engendré par la réaction sur le produit solide humide issu de la zone (1), et à sécher simultanément le produit qui en résulte, et on recueille le produit sec ainsi obtenu à la sortie de la zone (2).

Dans le procédé selon l'invention, la vapeur d'eau est envoyée en même temps que la bouillie dans la zone (2), tandis que dans les différents modes de réalisation de l'art antérieur, la vapeur d'eau dégagée par la réaction entre l'acide et l'ammoniac est toujours séparée de la bouillie avant que celle-ci, mélangée aux matières solides, n'arrive dans la zone de séchage, que cette séparation s'opère dans la cuve de neutralisation, à la sortie du réacteur tubulaire, ou dans le granulateur lui-même.

Contrairement à ce qui laissait prévoir l'enseignement issu de l'art antérieur, de manière inattendue le fait d'envoyer dans la zone (2), en même temps que la bouillie, la vapeur d'eau produite par la réaction, ne nuit en rien à l'efficacité du séchage.

La zone (1) est réalisée par tout moyen de mélange, comme un malaxeur, un plateau rotatif incliné, un tambour tournant, ou tout autre appareil mélangeur. On y introduit en continu le produit solide recyclé, les matières premières solides, par exemple un sel de potassium, du superphosphate, et des matières liquides, telles qu'une bouillie de phosphate d'ammonium, une solution concentrée de nitrate d'ammonium ou d'urée. Dans les procédés habituels de la technique, l'essentiel de la granulation est obtenu dans cet appareil mélangeur, qui pour cette raison est appelé « granulateur ». Il est de pratique courante d'injecter de l'ammoniac à l'intérieur de la masse solide humide en mouvement, pour neutraliser l'acidité du superphosphate, ou pour augmenter le rapport atomique N/P du phosphate d'ammonium. Un appareil granulateur équipé d'un dispositif d'injection d'ammoniac sous le lit de produit est appelé communément « ammoniateur-granulateur ».

Dans ce qui suit, on appellera toujours « granulateur » l'appareil qui réalise la zone (1), quel que soit le degré de granulation et/ou d'ammoniation que l'on obtient dans les conditions opératoires choisies.

La zone (2) est réalisée de préférence au moyen d'un séchoir rotatif équipé intérieurement de pales pour élever le produit solide humide provenant du mélangeur et le distribuer en pluie dans le volume utile.

L'appareil est parcouru par un courant de gaz chauds circulant de préférence dans le même sens que le produit.

Le réacteur tubulaire (5) constitue une zone de réaction confinée et allongée. Ce peut être un simple cylindre creux équipé à une extrémité de tubulures pour l'admission des réactifs. Ce cylindre ou tube peut être muni d'éléments pouvant perturber l'écoulement des fluides, par exemple hélices, chicanes, coudes, sinuosités, rétrécissements, élargissements, éléments Venturi. De façon préférencielle, on détermine les dimensions et la configuration de l'appareil de telle sorte que le rendement de fixation de l'ammoniac soit supérieur à 99 %, lorsqu'on neutralise de l'acide phosphorique jusqu'au stade de phosphate monoammonique.

On place avantageusement la buse de sortie du réacteur tubulaire (5) à l'entrée ou près de l'entrée, du tambour séchoir (2) et relativement près de l'axe de celui-ci. Dans ce cas on oriente l'appareil de telle sorte que le jet des produits de la réaction rencontre le plus loin possible la paroi du séchoir (2). L'angle initial de ce jet avec l'axe du tambour séchoir est d'autant plus faible que la buse de sortie est plus proche de cet axe.

Sans sortir du cadre de l'invention, on peut installer plusieurs réacteurs tubulaires les uns à côté des autres, dans la position décrite ci-dessus. On peut également munir le réacteur tubulaire de plusieurs buses de sortie. Bien que l'on préfère généralement installer le réacteur tubulaire (5) à l'entrée du séchoir (2), il est possible également d'opérer avec le réacteur tubulaire installé à l'autre extrémité, près de la sortie du séchoir, et projetant vers l'amont du séchoir les produits de la réaction.

Le fluide ammoniacal introduit dans le réacteur tubulaire (5) est généralement de l'ammoniac anhydre, à l'état liquide ou gazeux.

Ce peut être aussi une solution aqueuse d'ammoniac, contenant éventuellement du nitrate d'ammonium ou de l'urée.

Le liquide acide introduit dans le réacteur tubulaire (5) est généralement de l'acide phosphorique de voie humide à une concentration comprise entre 30 et 54 % environ de $P_2O_5$ ou une bouillie acide contenant de l'acide phosphorique. On peut aussi introduire simultanément de l'acide sulfurique, de l'acide nitrique.

La réaction entre ces acides et l'ammoniac est accompagnée d'un fort dégagement de chaleur, qui

3

provoque l'ébullition du liquide.

On obtient ainsi à la sortie du réacteur tubulaire un jet puissant de vapeur d'eau et d'une bouillie de sels d'ammonium, qui pénètre à l'intérieur du séchoir. La bouillie est projetée à l'état pulvérisé contre la pluie de particules solides tombant des pales, et contre le produit qui roule au fond du séchoir. La majeure partie de la bouillie adhère ainsi en surface aux particules provenant du granulateur, donnant naissance à des grains bien réguliers, de calibre moyen un peu plus gros qu'à la sortie du granulateur. Toutefois, on a observé que lorsqu'on emploie de l'acide phosphorique à une concentration suffisante, par exemple de l'ordre de 49 % en P205, une partie des gouttelettes projetées dans le séchoir échappe à l'impact contre le produit solide pendant qu'elles sont encore à l'état liquide. Ces gouttelettes se solidifient en vol, donnant naissance à des petites sphères de diamètre compris généralement entre 0,1 et 0,5 mm. On les retrouve intégralement dans le produit séché recyclé au granulateur, soit qu'elles aient été entraînées dans le courant d'air et recueillies à la base des cyclones, soit qu'elles aient été séparées du produit fini par tamisage.

La proportion de la bouillie qui se solidifie ainsi en petites sphères sans adhérer aux particules provenant du granulateur est variable selon la conception des pales du séchoir, selon l'orientation du jet, etc... Elle est généralement comprise entre 20 et 40 % du débit de bouillie qui sort du réacteur tubulaire. Ce résultat inattendu, comme on le verra plus loin, est mis à profit avec avantage dans l'obtention d'un rapport atomique N/P élevé dans le produit fini.

Dans le procédé tel qu'il vient d'être décrit, la vapeur d'eau dégagée par la réaction entre en même temps que la bouillie dans le séchoir. Sa présence ne nuit en rien à l'efficacité du séchage.

Au contraire, il apparaît que cette vapeur d'eau, qui sort surchauffée à 120-160 °C du réacteur tubulaire, cède des calories à l'air de séchage évacué du séchoir vers 85-105 °C, et contribue ainsi à apporter la chaleur nécessaire au séchage, ce qui diminue la dépense calorifique.

Un des avantages du réacteur tubulaire est qu'il permet d'obtenir des bouillies à faible teneur en eau après détente, moins de 8 % par exemple, et aussi bas que 2 %, moyennant l'emploi d'acides à une concentration appropriée. Si l'on introduit simultanément dans le granulateur une solution très concentrée ou un produit fondu, par exemple une solution de nitrate d'ammonium à plus de 94 %, ou d'urée, les chaleurs dégagées par les réactions et les cristallisations, compte tenu de la haute température des produits entrant dans le séchoir, peuvent devenir suffisantes pour évaporer l'eau, sans qu'on ait à chauffer l'air admis dans le séchoir. Celui-ci fonctionne alors simultanément en séchoir et en refroidisseur préliminaire. Par la diminution du recyclage et la complète utilisation des calories de la réaction, le procédé selon l'invention permet des économies d'énergie considérables.

La quantité de matières liquides introduite dans l'appareil mélangeur granulateur doit être au moins suffisante pour mouiller les solides et agglomérer les poussières, de façon à éviter leur envolement dans le séchoir. Le plus souvent on préfère obtenir dès la sortie du granulateur un produit partiellement granulé, contenant par exemple 30 à 50 % de grains au calibre désiré.

Si la quantité de matières premières liquides, autres que les acides, à introduire dans le granulateur n'est pas suffisante pour obtenir la granulométrie désirée, un moyen simple permet d'y remédier.

Il consiste à diviser en deux parties le flux des acides. Une partie est envoyée dans le réacteur tubulaire qui alimente le séchoir. L'autre partie est neutralisée séparément, et la bouillie résultante est introduite dans le granulateur. Cette neutralisation peut être effectuée au moyen de tout dispositif connu, par exemple une cuve, ou un second réacteur tubulaire débouchant dans le granulateur.

Si au contraire, la quantité de matières liquides, autres que les acides, à introduire dans le granulateur est trop importante pour permettre un faible taux de recyclage, on peut y remédier en pulvérisant dans le séchoir une partie de ces matières liquides.

Un moyen simple d'effectuer cette opération sans appareillage supplémentaire consiste à introduire la fraction désirée des matières liquides dans le réacteur tubulaire du séchoir, qui assure la pulvérisation. Dans le cas d'une solution concentrée de nitrate d'ammonium ou d'urée, il est préférable d'effectuer cette introduction près de la sortie du réacteur tubulaire de façon à éviter une décomposition de ces sels en milieu chaud et acide.

Dans la pratique industrielle, c'est généralement la première alternative qui se présente, à savoir la dérivation d'une partie du flux acide vers le granulateur. La répartition du flux d'acides entre les réacteurs de neutralisation qui alimentent respectivement le granulateur et le séchoir constitue un moyen très simple, pratique et efficace de régler la granulation. Cela permet d'opérer avec un faible taux de recyclage, moins de 5 fois, et généralement moins de 3 fois la production. L'expérience montre que la granulation est très stable ; on peut faire varier dans de larges limites la répartition des liquides entre le granulateur et le séchoir sans avoir pour autant à modifier sensiblement le recyclage.

Le procédé autorise donc une grande souplesse dans les réglages, et permet une conduite facile de l'atelier.

D'une manière générale, si l'on considère l'ensemble des matières liquides introduites dans le granulateur et dans le séchoir, y compris les bouillies résultant de la neutralisation des acides, la fraction de la masse totale des matières liquides introduites dans chacun de ces deux appareils reste comprise entre 10 et 90 % de la masse totale des matières liquides.

Le procédé permet aussi bien que les procédés traditionnels de régler à volonté le rapport atomique N/P du phosphate d'ammonium contenu dans le produit fini à toute valeur comprise entre 1,0 et 1,8 environ, autrement dit de fabriquer pratiquement toute la gamme des mélanges de phosphate monoammonique et de phosphate diammonique. La quantité d'ammoniac introduite dans le réacteur de neutralisation qui alimente le granulateur, et dans le réacteur tubulaire qui alimente le séchoir, est généralement réglée de façon à neutraliser complètement les acides autres que l'acide phosphorique, et à neutraliser l'acide phosphorique jusqu'à un rapport N/P compris entre 0,8 et 1,6, de préférence entre 1,0 et 1,4. L'injection complémentaire d'ammoniac dans le granulateur sous le lit de produit permet de relever ce rapport N/P, et d'obtenir dans tous les cas un rapport égal ou supérieur à 1,0 dans le produit fini.

On préfère en général faire fonctionner le réacteur tubulaire qui débouche dans le séchoir à un rapport supérieur à 1,0, mais inférieur à 1,4, pour limiter la perte d'ammoniac. Malgré cela, il est possible d'obtenir dans le produit fini un rapport N/P aussi élevé que dans les procédés traditionnels, compris par exemple entre 1,5 et 1,8.

A cet effet, on injecte une quantité suffisante d'ammoniac dans le granulateur pour obtenir un rapport N/P compris entre 1,6 et 2,0 dans le produit solide humide qui entre dans le séchoir. La pulvérisation dans celui-ci d'une bouillie au rapport N/P = 1,0-1,4 abaisse le rapport atomique moyen dans le produit qui sort du séchoir, mais cet effet est moins marqué dans la fraction de produit au calibre désiré qui constitue le produit fini, car, comme nous l'avons vu, une partie de la bouillie projetée par le réacteur tubulaire cristallise en vol sous forme de très petites sphères qu'on retrouve à la base des cyclones ou dans les fines séparées du produit fini granulé par le tamisage.

Ces fines particules constituées essentiellement de phosphate monoammonique sont ainsi intégralement recyclées dans le granulateur où leur état divisé et leur grande surface sont éminemment favorables à l'absorption de l'ammoniac injecté dans le granulateur, jusqu'à leur transformation en phosphate diammonique.

D'autre part, la perte d'ammoniac dans le séchoir est beaucoup plus faible que dans le procédé de l'art antérieur, ce qu'on attribue au fait que chaque grain de produit est entouré d'une pellicule riche en phosphate monoammonique, qui retient l'ammoniac dégagé lors du séchage par le phosphate diammonique contenu dans le centre du grain.

Pour ces deux raisons, le rapport N/P dans le produit fini calibré est plus élevé qu'on ne s'y attendrait en appliquant la règle des mélanges, et en tenant compte de la perte d'ammoniac habituellement observée lorsqu'on sèche un produit contenant du phosphate diammonique.

Notons par ailleurs, que la pellicule riche en phosphate monoammonique qui recouvre chaque particule recyclée au granulateur est dans un état physique divisé et poreux qui favorise grandement l'absorption de l'ammoniac dans ce granulateur.

Cette propriété très intéressante de la couche superficielle de phosphate monoammonique déposée sur les grains par le réacteur tubulaire du séchoir est un avantage marqué du procédé par rapport à l'art antérieur.

Lorsqu'on fabrique des engrais contenant du phosphate diammonique, il est indispensable de récupérer l'ammoniac qui se dégage du granulateur, du séchoir, et éventuellement de la cuve de neutralisation qui alimente le granulateur. A cet effet, on lave les gaz extraits de ces appareils par contact avec une solution aqueuse maintenue acide par un appoint d'acide sulfurique, nitrique, ou phosphorique.

Ce lavage arrête en même temps les poussières qui ont échappé aux cyclones. On obtient ainsi une solution riche en sels fertilisants, qu'il faut recycler en fabrication. On peut introduire cet effluent liquide dans le granulateur, ou dans les réacteurs de neutralisation. Une telle introduction dans le réacteur tubulaire qui débouche dans le séchoir apporte une quantité supplémentaire d'eau qui favorise la fixation de l'ammoniac.

Lorsque l'on fabrique du phosphate diammonique commercial dont le rapport atomique N/P est généralement compris entre 1,81 et 1,85, avantageusement, on introduit dans le mélangeur une quantité de produit séché recyclé égale à environ 3 fois la production, on utilise un acide phosphorique d'une concentration généralement comprise entre 42 et 50 % de $P_2O_5$, selon, en particulier, que l'ammoniac est sous forme liquide ou gazeuse, on divise en deux parties sensiblement égales le flux d'acide phosphorique, on neutralise les deux parties jusqu'au rapport atomique N/P = 1,2-1,5 dans deux réacteurs tubulaires débitant respectivement dans le granulateur et dans le séchoir, en injectant de l'ammoniac sous le lit de produit dans le granulateur pour obtenir dans le produit qui sort du granulateur un rapport atomique N/P = 1,9 à 2.

Le procédé selon l'invention peut facilement être appliqué dans une installation existante de fabrication d'engrais granulés, de conception traditionnelle.

Il suffit pour cela d'installer un réacteur tubulaire de neutralisation débouchant dans le séchoir, appareil simple et peu coûteux. Il en résulte une réduction considérable du recyclage, et une économie sensible de la consommation calorifique, consommation complètement annulée dans certains cas.

Grâce à ces deux effets combinés, la production peut généralement être augmentée de plus de 50 % pourvu que l'on adapte aux nouveaux débits l'appareillage annexe, notamment les alimentations en matières premières solides et liquides, le refroidissement et l'évacuation du produit fini.

Au lieu d'introduire un acide, ou un mélange d'acides, dans le réacteur tubulaire du séchoir, on peut également introduire une bouillie acide, par exemple une bouillie obtenue en attaquant un phosphate naturel par un excès d'un liquide acide contenant l'un au moins des acides phosphorique, nitrique, sulfurique. Par exemple, dans certains procédés de fabrication des engrais NP/NPK, on attaque le phosphate naturel par l'acide nitrique, on sépare par cristallisation le nitrate de calcium formé, on neutralise par l'ammoniac la bouillie acide obtenue dans une série de cuves agitées, et l'on concentre généralement la bouillie finale jusqu'à moins de 6 % d'eau avant granulation. Dans le procédé selon l'invention, l'étape de concentration est supprimée et l'étape de neutralisation est effectuée au moyen de deux réacteurs tubulaires débitant respectivement dans le granulateur et dans le séchoir. La bouillie acide est répartie entre ces deux réacteurs tubulaires de façon à régler au mieux la granulation. Malgré la teneur en eau élevée des bouillies, on parvient ainsi à fonctionner avec un taux de recyclage de matière séchée inférieur à 5 fois la production.

Bien évidemment de nombreuses modifications et variantes de l'invention telle que décrite ci-dessus peuvent être faites sans sortir de l'esprit et du domaine de l'invention.

Le procédé selon l'invention s'applique à la fabrication d'une gamme très variée d'engrais NP/NPK granulés. On peut citer notamment :

— les phosphates d'ammonium : monoammonique, diammonique et leur mélange,

— les engrais à base de sulfate et phosphate d'ammonium, les acides sulfurique et phosphorique sont répartis en proportions appropriées entre les réacteurs tubulaires du granulateur et du séchoir, de façon à régler au mieux la granulation,

— les engrais à base de nitrate d'ammonium et de phosphate d'ammonium.

La solution de nitrate d'ammonium est introduite dans le granulateur, une partie peut être dérivée vers le réacteur tubulaire du séchoir.

L'acide phosphorique est réparti entre le réacteur de neutralisation, par exemple un réacteur tubulaire qui alimente le granulateur, et le réacteur tubulaire du séchoir.

— les engrais à base d'urée et de phosphate d'ammonium, même processus et mêmes variantes,

— les engrais obtenus par les procédés dits « d'attaque nitrique », qu'il s'agisse de l'attaque du phosphate naturel par l'acide nitrique seul, avec cristallisation du nitrate de calcium, ou de l'attaque du phosphate par un mélange des acides nitrique, sulfurique, phosphorique.

Bien entendu le procédé de l'invention s'applique encore avec avantage dans la préparation de produits divers à partir de matières premières liquides que l'on fait réagir dans un réacteur tubulaire, et on fait déboucher celui-ci dans un séchoir ou dans un calcinateur.

Mais la présente invention sera plus aisément comprise à l'aide du schéma annexé et des exemples suivants donnés à titre illustratif mais nullement limitatif.

L'installation comprend essentiellement :

— un mélangeur-granulateur 1 et un séchoir 2 montés en série. Dans les exemples suivants le granulateur 1 et le séchoir 2 sont constitués par des tambours tournants d'axe légèrement incliné sur l'horizontale ;

— une installation de criblage 3 qui reçoit les matières sortant du séchoir 2 et permet de les classer en trois fractions. Le produit qui est trop gros est broyé et recyclé en même temps que le produit trop fin à l'entrée du granulateur en 4 ;

— un réacteur tubulaire de neutralisation 5, débouchant dans le séchoir et éventuellement un second réacteur tubulaire non représenté débouchant dans le granulateur 1.

Les matières premières sont introduites comme suit :

— par 6 l'acide phosphorique, dans le réacteur tubulaire 5 ;

— par 7 l'ammoniac qui est réparti entre le réacteur tubulaire 5 et une rampe 8 d'ammoniation disposée sous le produit dans le granulateur ;

— une solution aqueuse (par exemple de nitrate d'ammonium ou d'urée) en 9 qui est distribuée dans le granulateur par un tuyau 10 percé de trous ou muni de pulvérisateurs ;

— en 11, les matières premières solides ;

— en 12 éventuellement une arrivée d'acide nitrique.

L'air de séchage pénètre en 13 dans le séchoir, il est, si besoin est, chauffé en 14 ; il est évacué avec la vapeur d'eau en 15 ; de même les gaz sont évacués du mélangeur-granulateur en 16.

On recueille le produit fini en 17, on en recycle éventuellement une partie en 18.

On introduit en 19 et/ou en 20 le ou les effluents liquides provenant des laveurs de gaz, soit en 19 dans le réacteur tubulaire et/ou en 20 dans le granulateur.

Exemple 1

Fabrication de phosphate diammonique

Le produit commercial 18.46.0. répond à la composition suivante :

| | | |
|---|---|---|
| $NH_3$ | 218,6 dont | 18,6 fixés par $H_2SO_4$<br>200,0 fixés par $H_3PO_4$ |
| $H_2SO_4$ | 53,6 | |
| Acide phosphorique :<br>$P_2O_5$ | 460,0 | |

| | |
|---|---|
| H$_2$O liée à P$_2$O$_5$ | 174,8 |
| impuretés | 83,0 |
| H$_2$O libre | 10,0 |
| Total | 1 000,0 |

Dans ce produit, le rapport atomique N/P est égal à 1,82.

On utilise de l'acide phosphorique de voie humide à une concentration de 48 % de P$_2$O$_5$, et de l'ammoniac liquide anhydre.

On met en œuvre l'appareillage précédemment décrit en utilisant deux réacteurs tubulaires débitant respectivement l'un, dans le granulateur, et l'autre dans le séchoir. L'acide sulfurique et l'effluent liquide du système de lavage des gaz non représenté sont introduits dans le réacteur tubulaire du granulateur.

Le flux d'acide phosphorique est partagé en deux parties sensiblement égales :

La première moitié alimente le réacteur tubulaire du granulateur qui fonctionne au rapport 1,35-1,45. L'injection complémentaire d'ammoniac dans le lit du produit porte ce rapport à 1,96 dans le produit qui entre dans le séchoir.

La seconde moitié de l'acide phosphorique est neutralisée dans le réacteur tubulaire du séchoir jusqu'au rapport 1,2.

Le recyclage étant réglé à 3 fois la production, pour une molécule de H$_3$PO$_4$ contenue dans le produit fini, on mélange donc à l'entrée du séchoir :

3,5 mol. de H$_3$PO$_4$ neutralisées par 3,5 × 1,96 = 6,86 mol. de NH$_3$
0,5 mol. de H$_3$PO$_4$ neutralisées par 0,5 × 1,20 = 0,60 mol. de NH$_3$
4,0 mol. de H$_3$PO$_4$ neutralisées par ....         7,46 mol. de NH$_3$

ce qui correspondrait à un rapport N/P = 1,865, dans l'ensemble du produit qui sort du séchoir s'il n'y avait aucune perte d'ammoniac au cours du séchage.

Dans la réalité, deux effets contraires donnent un rapport N/P légèrement différent dans la fraction de ce produit qui est au calibre désiré et constitue le produit fini :

— d'une part une partie de la bouillie au rapport N/P = 1,2 se solidifie en vol en fines particules sans s'incorporer aux grains de calibre désiré ce qui donne un rapport N/P plus élevé dans ceux-ci que dans les fines,

— d'autre part, le séchage est accompagné d'une certaine perte d'ammoniac, qui diminue légèrement le rapport N/P dans les grains.

Au total, le rapport N/P dans le produit fini calibré s'établit à 1,82-1,84.

La perte d'ammoniac au cours du séchage est beaucoup plus faible que dans le procédé de l'ammoniateur-granulateur de l'art antérieur, elle n'est que de 3 % environ au lieu de 7 %.

Grâce à la répartition de la bouillie entre le granulateur et le séchoir, le recyclage est abaissé à 3 fois la production contre 5 à 6 fois dans l'art antérieur.

Exemple 2

On fabrique un engrais NPK de formule 17.17.17 à base de nitrate et phosphate d'ammonium, dans une installation de granulation comportant en série un granulateur et un séchoir rotatif, avec recyclage de produit séché en tête du granulateur. Le granulateur et le séchoir sont équipés chacun d'un réacteur tubulaire de neutralisation de l'acide phosphorique par l'ammoniac anhydre.

Les quantités introduites en différents points de l'installation sont indiquées dans la partie supérieure au tableau I ci-après. Le superphosphate ordinaire sert à ajuster le titre de l'engrais.

Pour récupérer la petite quantité d'ammoniac (5 à 10 % du total) qui s'échappe du granulateur et du séchoir, une fraction de l'acide phosphorique (ou de l'acide nitrique qui sert à préparer le nitrate d'ammonium) est dérivée vers le système de lavage des gaz, d'où elle revient ensuite dans l'un ou l'autre des réacteurs tubulaires.

Cela ne change pas le bilan des matières premières, mais introduit une quantité supplémentaire d'eau.

On règle cet appoint d'eau de façon à maintenir la densité du liquide en circulation sur les laveurs de gaz en-dessous de 1,4, pour éviter les cristallisations et obtenir un lavage efficace des gaz qui contiennent de l'ammoniac et des poussières. Ce supplément d'eau, par rapport à l'emploi direct d'acide phosphorique à 49 % de P$_2$O$_5$, ou de solution à 92 % de NH$_4$NO$_3$, figure sous la rubrique « eau revenant des laveurs de gaz » à la troisième ligne avant la fin du tableau I.

Le rapport atomique N/P en différents points apparaît dans le tableau II.

Ce rapport est un peu plus élevé dans le produit fini que ne le laisserait prévoir la règle des mélanges, en raison de la présence dans les fines recyclées, de petites sphères de phosphate monoammonique solidifiées en vol dans le séchoir.

Les avantages du procédé de l'invention, qui consiste ici à introduire la moitié du débit de l'acide phosphorique dans le réacteur tubulaire du séchoir, apparaissent dans le tableau II où l'on a porté en bas du tableau le résultat obtenu avec un procédé connu, qui consiste à introduire la totalité de l'acide phosphorique dans le réacteur tubulaire du granulateur.

Le taux de recyclage tombe de 6 fois à 3,2 fois la production, la dépense de combustible diminue de moitié, toutes choses égales d'ailleurs, et dans l'installation existante la capacité de production augmente de 53 %. La production n'est plus limitée par la capacité de recyclage, mais seulement par les contraintes inhérentes à l'installation. Le taux de recyclage n'est plus imposé par le rapport phase liquide/phase solide, contrairement aux procédés de l'art antérieur, mais par les rendements de granulation et de tamisage.

Le produit obtenu selon cet exemple a un aspect sensiblement sphérique et présente la granulométrie suivante : particules de diamètre supérieur à 4 mm : 0 ; entre 3,15 et 4 mm : 35 % ; entre 2 et 3,15 mm : 65 %.

Dans les exemples suivants, les quantités mises en œuvre et les conditions opératoires caractéristiques sont regroupées dans les tableaux I et II ci-après.

## Exemple 3

On met en œuvre, ainsi que dans les exemples 4 et 7 suivants l'appareillage représenté, qui comporte un seul réacteur tubulaire débitant dans le séchoir, dans lequel on introduit la totalité de l'acide phosphorique.

## Exemple 4

Dans cet exemple on introduit dans le réacteur tubulaire à la fois l'acide phosphorique et de l'acide nitrique, celui-ci par la ligne 12 représentée en pointillé.

On conserve seulement un peu de liqueur de nitrate d'ammonium dans le granulateur pour agglomérer les poussières et éviter leur envolement dans le séchoir, où s'effectue l'essentiel de la granulation. Du fait de l'emploi d'acide nitrique à 58 % dans le réacteur tubulaire du séchoir, la quantité d'eau à évaporer est 2,05 fois plus forte que dans l'exemple 3, mais la quantité d'ammoniac utilisée au total est multipliée par 1,91, ce qui augmente à peu près dans les mêmes proportions la chaleur dégagée par la neutralisation.

## Exemples 5 et 6

On opère comme dans l'exemple 2 précédent, avec des répartitions différentes de l'acide phosphorique entre les réacteurs tubulaires du granulateur et du séchoir.

## Exemple 7

On opère comme dans les exemples 3 et 4 précédents.

Au tableau II on a également indiqué les valeurs du rapport atomique N/P, en différents points du circuit.

Bien que le rapport N/P à la sortie du réacteur tubulaire du séchoir soit limité à la valeur 1,2 environ pour éviter des pertes d'ammoniac difficiles à récupérer, le procédé selon l'invention permet de fabriquer des engrais contenant une dose notable de phosphate diammonique, comme le montrent les exemples 2 à 6.

Un autre avantage est que le réglage de ce rapport au-dessus de 1, en tous points de l'installation, permet d'annuler pratiquement toute émission de fluor.

En bas du tableau II, on a porté les performances du même atelier avant l'installation du réacteur tubulaire qui débouche dans le séchoir. La comparaison avec les résultats du procédé de l'invention permet d'apprécier les progrès considérables accomplis.

Dans le cas de l'engrais 18.22.12 et du 15.20.20, l'augmentation de production est de 60-70 %. La consommation d'énergie électrique est réduite dans les mêmes proportions, tandis que la consommation de combustible est totalement supprimée.

(voir Tableaux pages suivantes)

Tableau I

Quantités introduites dans le granulateur et dans le réacteur tubulaire du séchoir, en kilogrammes par tonne de produit fini.

| N° de l'exemple | 2 | 3 | 4 |
|---|---|---|---|
| Formule | 17.17.17 | 17.17.17 | 17.17.17 |
| **Entrées dans le granulateur** | | | |
| **1) Matières solides** | | | |
| Produit séché recyclé | 3 200 | 2 500 | 2 000 |
| Superphosphate à 18 % de P2O5 | 54 | 45 | 45 |
| Chlorure de potassium à 60 % de K2O | 284 | 284 | 284 |
| TOTAL..................... | 3 538 | 2 829 | 2 329 |
| **2) matières liquides** | | | |
| a) introduites directement | | | |
| Solution à 92 % de NH4NO3 | 363 | 378 | 100 |
| Ammoniac injecté dans le lit | 18 | 16 | 16 |
| b) introduites par le réacteur tubulaire | | | |
| Acid. Phosph. à 49 % de P2O5 | 164 | — | — |
| Ammoniac | 27 | — | — |
| Eau revenant des laveurs de gaz | 12 | — | — |
| Sous-total matières liquides.................... | 582 | 394 | 116 |
| **Entrées dans le réacteur tubulaire du séchoir** | | | |
| Acide nitrique à 58 % de HNO3 | — | — | 350 |
| Acid. Phosph. à 49 % de P2O5 | 164 | 331 | 331 |
| Ammoniac | 20 | 43 | 97 |
| Eau revenant des laveurs de gaz | — | 7 | 9 |
| Sous total matières liquides | 184 | 381 | 787 |
| Total matières liquides | 766 | 775 | 903 |
| H2O évaporée au total dans le granulateur et dans le séchoir | 104 | 104 | 232 |

Tableau I (suite)

| N° de l'exemple | 5 | 6 | 7 |
|---|---|---|---|
| Formule | 15.20.20 | 18.22.12 | 23.23.00 |
| **Entrées dans le granulateur** | | | |
| **1) Matières solides** | | | |
| Produit séché recyclé | 2 500 | 3 000 | 3 000 |
| Superphosphate à 18 % de $P_2O_5$ | 22 | 60 | 68 |
| Chlorure de potassium à 60 % de $K_2O$ | 334 | 200 | – |
| TOTAL...................... | 2 856 | 3 260 | 3 068 |
| **2) matières liquides** | | | |
| a) introduites directement | | | |
| Solution à 92 % de $NH_4NO_3$ | 265 | 345 | 577 |
| Ammoniac injecté dans le lit | 24 | 26 | – |
| b) introduites par le réacteur tubulaire | | | |
| Acid. Phosph. à 49 % de $P_2O_5$ | 100 | 86 | – |
| Ammoniac | 16 | 14 | – |
| Eau revenant des laveurs de gaz | 8 | 9 | – |
| Sous-total matières liquides ................. | 413 | 480 | 577 |
| **Entrées dans le réacteur tubulaire du séchoir** | | | |
| Acide nitrique à 58 % de $HNO_3$ | – | – | – |
| Acid. Phosph. à 49 % de $P_2O_5$ | 300 | 342 | 445 |
| Ammoniac | 39 | 44 | 54 |
| Eau revenant des laveurs de gaz | – | – | 3 |
| Sous total matières liquides | 339 | 386 | 502 |
| Total matières liquides | 752 | 866 | 1 079 |
| $H_2O$ évaporée au total dans le granulateur et dans le séchoir | 108 | 126 | 147 |

Tableau II

Répartition des matières premières liquides entre le granulateur et le séchoir et autres conditions opératoires.

| N° de l'exemple | 2 | 3 | 4 |
|---|---|---|---|
| Formule | 17.17.17 | 17.17.17 | 17.17.17 |
| **Répartition des matières liquides** | | | |
| Acide phosphorique | | | |
| % vers granulateur | 50 | 0 | 0 |
| % vers séchoir | 50 | 100 | 100 |
| Solution de nitrate d'ammonium | | | |
| % dans granulateur | 100 | 100 | 26,3 |
| % dans séchoir | 0 | 0 | 73,7 |
| Ensemble des matières liquides | | | |
| % dans granulateur | 76 | 51 | 13 |
| % dans séchoir | 24 | 49 | 87 |
| Rapport $\dfrac{\text{matières liquides}}{\text{matières solides}}$ entrant dans le granulateur | 0,16 | 0,14 | 0,05 |
| **Rapport atomique N/P** | | | |
| - sortie réacteur tubulaire du granulateur | 1,40 | – | – |
| - sortie granulateur | 1,73 | 1,61 | 1,67 |
| - sortie réacteur tubulaire du séchoir | 1,04 | 1,10 | 1,10 |
| - sortie du séchoir (produit fini) | 1,66 | 1,49 | 1,48 |
| Taux de recyclage | 3,2 | 2,5 | 2,0 |
| Production horaires en tonnes | 92 | 92 | 92 |
| Consommation du fuel-oil en kg par tonne de produit fini | 4 | 3 | 3 |
| A titre de comparaison : Conditions opératoires sans utiliser le réacteur tubulaire du séchoir | | | |
| Taux de recyclage | 6 | 6 | 6 |
| Production horaire en tonnes | 60 | 60 | 60 |
| Consommation de fuel-oil en kg par tonne de produit fini | 8 | 8 | 8 |

Tableau II (suite)

| N° de l'exemple | 5 | 6 | 7 |
|---|---|---|---|
| Formule | 15.20.20 | 18.22.12 | 23.23.00 |
| **Répartition des matières liquides** | | | |
| Acide phosphorique | | | |
| % vers granulateur | 25 | 20 | 0 |
| % vers séchoir | 75 | 80 | 100 |
| Solution de nitrate d'ammonium: | | | |
| % dans granulateur | 100 | 100 | 100 |
| % dans séchoir | 0 | 0 | 0 |
| Ensemble des matières liquides: | | | |
| % dans granulateur | 55 | 55,4 | 53,5 |
| % dans séchoir | 45 | 44,6 | 46,5 |
| Rapport $\frac{\text{matières liquides}}{\text{matières solides}}$ entrant dans le granulateur | 0,14 | 0,15 | 0,19 |
| **Rapport atomique N/P** | | | |
| – sortie réacteur tubulaire du granulateur | 1,36 | 1,39 | – |
| – sortie granulateur | 1,80 | 1,78 | 1,00 |
| – sortie réacteur tubulaire du séchoir | 1,10 | 1,09 | 1,00 |
| – sortie du séchoir (produit fini) | 1,67 | 1,67 | 1,00 |
| Taux de recyclage | 2,5 | 3,0 | 3,0 |
| Production horaires en tonnes | 95 | 85 | 80 |
| Consommation du fuel-oil en kg par tonne de produit fini | 0 | 0 | 0 |
| A titre de comparaison : Conditions opératoires sans utiliser le réacteur tubulaire du séchoir | | | |
| Taux de recyclage | 4,5 | 5,3 | 6 |
| Production horaire en tonnes | 70 | 65 | 55 |
| Consommation de fuel-oil en kg par tonne de produit fini | 7 | 7 | 6 |

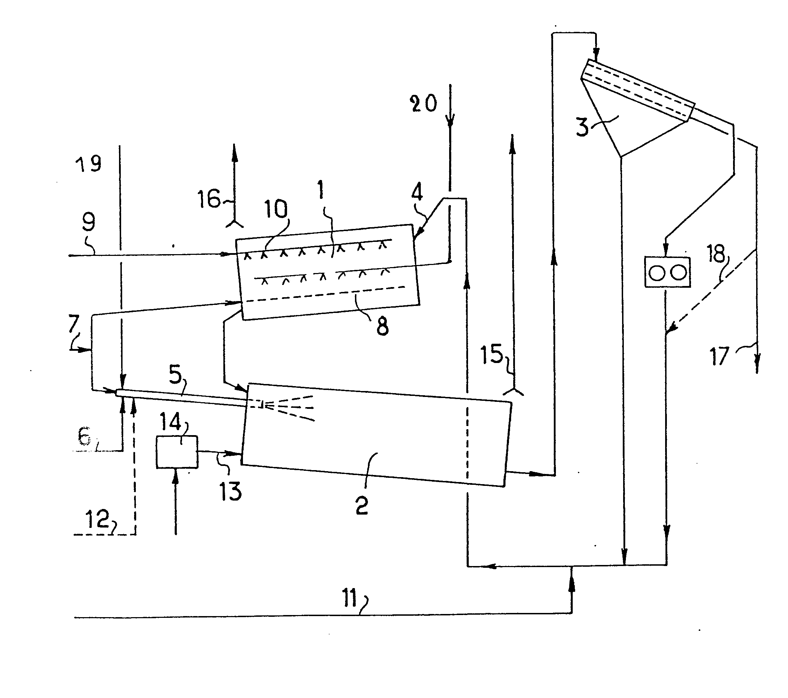

## Revendications

1. Procédé continu en deux stades pour la fabrication de produits sous forme de particules solides notamment d'engrais granulés NP/NPK contenant des phosphates d'ammonium, dans lequel on réalise le premier stade en introduisant dans une première zone (1) des matières premières solides, du produit séché recyclé, des matières liquides et éventuellement un fluide ammoniacal, on transfère le produit solide humide divisé ainsi obtenu dans une deuxième zone (2) parcourue par un courant de gaz éventuellement chauffé où on réalise le deuxième stade et on introduit dans la zone (2) un jet d'une bouillie obtenue par réaction d'un liquide acide et d'un fluide ammoniacal, procédé caractérisé par le fait que l'on réalise la réaction entre le liquide acide et le fluide ammoniacal par le moyen d'au moins un réacteur tubulaire (5) qui débouche dans la zone (2) de manière à projeter le mélange de bouillie et de vapeur d'eau engendré par la réaction sur le produit solide humide divisé issu de la zone (1) et à sécher simultanément le produit qui en résulte et on recueille le produit sec obtenu à la sortie de la zone (2).

2. Procédé selon la revendication 1 caractérisé par le fait que le fluide ammoniacal introduit dans le réacteur tubulaire (5) est un élément du groupe constitué par l'ammoniac gazeux, l'ammoniac liquide anhydre, une solution aqueuse d'ammoniac, une solution aqueuse d'ammoniac et de nitrate d'ammonium, une solution aqueuse d'ammoniac et d'urée.

3. Procédé selon l'une des revendications 1 à 2 caractérisé par le fait que le liquide acide est de l'acide phosphorique de voie humide, à une concentration comprise entre 30 et 54 % en $P_2O_5$.

4. Procédé selon l'une des revendications 1 à 3 caractérisé par le fait que l'on dérive une partie de l'acide vers un réacteur de neutralisation alimentant la zone (1), que l'on maintient un taux de recyclage de produit séché inférieur à 5 fois la production, et que l'on règle la granulation en répartissant l'acide entre les réacteurs de neutralisation qui alimentent respectivement les zones (1) et (2).

5. Procédé selon la revendication 4 caractérisé par le fait que l'on maintient un taux de recyclage de produit séché inférieur à 3.

6. Procédé selon l'une des revendications 1 à 5 caractérisé par le fait que l'on projette dans la zone (2) par le réacteur tubulaire (5) une quantité de bouillie représentant 10 à 90 % du total des matières liquides mises en œuvre et que l'on introduit le reste dans la zone (1).

7. Procédé selon l'une des revendications 1 à 6 caractérisé par le fait que l'on introduit dans le réacteur tubulaire (5) de l'acide phosphorique et simultanément au moins un acide du groupe de l'acide sulfurique, de l'acide nitrique et leur mélange.

8. Procédé selon l'une des revendications 1 à 7 caractérisé par le fait que le liquide acide résulte de l'attaque d'un phosphate naturel par un excès d'un acide d'un groupe des acides sulfurique, phosphorique, nitrique et leur mélange.

9. Procédé selon l'une des revendications 1 à 8 caractérisé par le fait que l'on introduit dans la zone (1) une substance liquide fertilisante constituée par une solution concentrée de nitrate d'ammonium.

10. Procédé selon la revendication 9 caractérisé en ce que l'on ajoute également une bouillie de phosphates d'ammonium.

11. Procédé selon l'une des revendications 1 à 10 caractérisé par le fait que l'on introduit dans le granulateur (1) une substance liquide fertilisante constituée par de l'urée sous forme d'une solution concentrée ou à l'état fondu.

12. Procédé selon la revendication 11 caractérisée par le fait que l'on ajoute également une bouillie de phosphates d'ammonium.

13. Procédé selon l'une des revendications 1 à 12 caractérisé par le fait que l'on injecte de l'ammoniac sous le lit de produit dans la zone (1).

14. Procédé de fabrication de phosphate diammonique granulé de rapport atomique N/P compris entre 1,81 et 1,85, selon l'une des revendications 1 à 8 caractérisé par le fait que l'on introduit dans la zone (1) une quantité de produit séché recyclé égale à environ 3 fois la production, que l'on divise en deux parties sensiblement égales le flux d'acide phosphorique, d'une concentration comprise entre 42 et 50 % de $P_2O_5$, que l'on neutralise par de l'ammoniac les deux parties jusqu'au rapport atomique N/P : 1,2-1,5 dans deux réacteurs tubulaires débitant respectivement dans les zones (1) et (2) et que l'on injecte de l'ammoniac sous le lit de produit dans la zone (1) pour obtenir dans le produit qui sort de la zone (1), un rapport atomique N/P de 1,9 à 2.

15. Utilisation pour la mise en œuvre du procédé selon l'une quelconque des revendications 1 à 14 d'un dispositif par le fait qu'il présente une boucle de granulation comportant en série un tambour granulateur (1) et un tambour séchoir rotatif (2) équipé de pales intérieures relevant le produit et le faisant tomber en pluie dans le courant de gaz chaud et muni d'un réacteur tubulaire (5) débouchant dans le tambour (2).

16. Utilisation selon la revendication 15 caractérisée par le fait que le tambour (1) est également équipé d'un réacteur tubulaire de neutralisation et d'un dispositif d'injection d'ammoniac dans le lit de produit.

17. Utilisation selon l'une des revendications 15 et 16 caractérisée par le fait que l'axe du jet du réacteur tubulaire (5) est sensiblement parallèle à l'axe du séchoir tournant.

**Claims**

1. A continuous method in two stages for manufacturing goods in the form of solid particles in particular NP/NPK granulated fertilizer containing ammonium phosphates in which the first stage is carried out by introducing into a first zone (1), solid raw materials, some of the recycled dried product, liquid substances and possibly an ammoniacal fluid, the divided moist solid product obtained in this way is transferred into a second zone (2), through which a gas stream, which is possibly heated, flows, and where the second stage is carried out and a jet of a slurry obtained by the reaction of an acid liquid and of an ammoniacal fluid is introduced into the zone (2), the method being characterized in that the reaction between the acid liquid and the ammoniacal fluid is produced by means of at least one tubular reactor (5) which opens into the zone (2) so as to spray the mixture of slurry and water vapour produced by the reaction onto the divided moist solid product coming from the zone (1) and at the same time to dry the resultant product and the dry product obtained at the outlet of the zone (2) is collected.

2. A method according to claim 1, characterized in that the ammoniacal fluid introduced into the tubular reactor (5) is a member of a group consisting of gaseous ammonia, anhydrous liquid ammonia, an aqueous solution of ammonia, an aqueous solution of ammonia and ammonium nitrate, and an aqueous solution of ammonia and urea.

3. A method according to one of claims 1 to 2, characterized in that the acid liquid is phosphoric acid of a wet process having a concentration between 30 and 54 % of $P_2O_5$.

4. A method according to one of claims 1 to 3, characterized in that a part of the acid is deverted towards a neutralisation reactor feeding the zone (1), in that a dried product recycling rate less than 5 times the output is maintained and in that the granulation is regulated by distributing the acid between the neutralisation reactors which feed the zones (1) and (2) respectively.

5. A method according to claim 4, characterized in that the dried product recycling rate is kept lower than 3.

6. A method according to one of claims 1 to 5, characterized in that a quantity of slurry representing 10 to 90 % of the total of the liquid substances used is sprayed into the zone (2) by means of the tubular reactor (5) and in that the rest is introduced into the zone (1).

7. A method according to one of claims 1 to 6, characterized in that the phosphoric acid and at the same time at least one acid of the sulphuric and nitric acid groups and a mixture thereof is introduced into the tubular reactor (5).

8. A method according to one of claims 1 to 7, characterized in that the acid liquid results from the corrosion of a natural phosphate by an excess of an acid of the sulphuric, phosphoric and nitric acid groups and mixtures thereof.

9. A method according to one of claims 1 to 8, characterized in that a liquid fertilizing substance made of a concentrated solution of ammonium nitrate is introduced into zone (1).

10. A method according to claim 9, characterized in that a slurry of ammonium phosphate is also added.

11. A method according to one of claims 1 to 10, characterized in that a liquid fertilizing substance made of urea is introduced into the granulator (1) in the form of concentrated solution or in a melted state.

12. A method according to claim 11, characterized in that a slurry of ammonium phosphate is also added.

13. A method according to one of claims 1 to 12, characterized in that ammonia is injected under the base of the product in the zone (1).

14. A method for manufacturing granulated diammonium phosphate with an N/P atomic ratio between 1.81 and 1.85 according to one of claims 1 to 8, characterized in that a quantity of recycled dried product equal to approximately 3 times the output is introduced into the zone (1), in that the phosphoric acid stream is divided into two substantially equal parts, having a concentration between 42 and 50 % of $P_2O_5$, in that the two parts are neutralised up to an N/P atomic ratio of 1.2-1.5 in two tubular reactors discharging into the zones (1) and (2) respectively and in that ammonia is injected under the base of the product in the zone (1) so as to obtain an N/P atomic ratio of 1.9 to 2 in the product which leaves the zone (1).

15. A use, for carrying out the method according to any one of claims 1 to 14, of a device characterized in that it has a granulation loop comprising in series a granulating drum (1) and a rotatable drum drier (2) which is equipped with inner blades lifting the product and letting it fall as a spray into the hot gas stream and is provided with a tubular reactor (5) opening into the drum (2).

16. A use according to claim 15, characterized in that the drum (1) is also equipped with a tubular neutralisation reactor and with a device for injecting ammonia into the base of the product.

17. A use according to one of claims 15 to 16, characterized in that the axis of the jet of the tubular reactor (5) is substantially parallel to the axis of the rotating drier.

**Ansprüche**

1. Kontinuierliches zweistufiges Verfahren zur Herstellung von Produkten in Form von festen Partikeln, insbesondere von Ammoniumphosphate enthaltendem granuliertem Dünger NP/NPK, bei welchem man die erste Stufe verwirklicht, indem feste Ausgangsstoffe, zurückgeführtes getrocknetes Produkt, flüssige Stoffe und gegebenenfalls ein ammoniakalisches Fluid in eine erste Zone (1) eingeführt werden, man das so erhaltene feuchte, zerkleinerte feste Produkt in eine von einem gegebenenfalls erhitzten Gasstrom durchströmte zweite Zone (2) überführt, wo die zweite Stufe durchgeführt wird, und man in die zweite Zone (2) einen Strahl einer Brühe einführt, die durch Reaktion einer sauren Flüssigkeit mit einem ammoniakalischen Fluid erhalten wird, dadurch gekennzeichnet, daß man die Reaktion zwischen der sauren Flüssigkeit und dem ammoniakalischen Fluid mittels wenigstens eines rohrförmigen Reaktors (5) durchführt, der in die Zone (2) derart einmündet, daß die durch die Reaktion entstandene Mischung aus Brühe und Wasserdampf auf das aus der Zone (1) herrührende feuchte zerkleinerte feste Produkt gespritzt wird und gleichzeitig des daraus resultierende Produkt getrocknet wird, und daß man das am Ausgang der Zone (2) erhaltene trockene Produkt sammelt.

2. Verfahren nach Anspruch 1, dadurch gekennzeichnet, daß das in den rohrförmigen Reaktor (5) eingeführte ammoniakalische Fluid ein Fluid aus der Gruppe bestehend aus gasförmigem Ammoniak, wasserfreiem flüssigem Ammoniak, wässriger Ammoniaklösung, wässriger Lösung von Ammoniak und Ammoniumnitrat und wässriger Lösung von Ammoniak und Harnstoff ist.

3. Verfahren nach Anspruch 1 oder 2, dadurch gekennzeichnet, daß die saure Flüssigkeit auf nassem Weg hergestellte Phosphorsäure einer Konzentration zwischen 30 und 54 % $P_2O_5$ ist.

4. Verfahren nach einem der Ansprüche 1 bis 3, dadurch gekennzeichnet, daß man einen Teil der Säure zu einem die Zone (2) speisenden Neutralisationsreaktor ableitet, daß man eine Rückführungsmenge an getrocknetem Produkt, die geringer ist als die 5-fache Produktion, aufrechterhält, und daß man die Granulierung regelt, indem man die Säure zwischen den jeweils die Zonen (1) und (2) speisenden Neutralisationsreaktoren aufteilt.

5. Verfahren nach Anspruch 4, dadurch gekennzeichnet, daß man ein Rückführungsverhältnis an getrocknetem Produkt unterhalb 3 aufrechterhält.

6. Verfahren nach einem der Ansprüche 1 bis 5, dadurch gekennzeichnet, daß man mittels des rohrförmigen Reaktors (5) in die Zone (2) eine 10 bis 90 % der Gesamtheit an eingesetzten flüssigen Stoffen darstellende Menge an Brühe einspritzt und daß man den Rest in die Zone (1) einführt.

7. Verfahren nach einem der Ansprüche 1 bis 6, dadurch gekennzeichnet, daß man in den rohrförmigen Reaktor (5) Phosphorsäure und gleichzeitig wenigstens eine Säure der Gruppe bestehend aus Schwefelsäure, Salpetersäure und deren Mischung einführt.

8. Verfahren nach einem der Ansprüche 1 bis 7, dadurch gekennzeichnet, daß die saure Flüssigkeit aus der Einwirkung eines Überschusses einer Säure der Gruppe bestehend aus Schwefelsäure, Phosphorsäure, Salpetersäure und deren Mischung auf ein natürliches Phosphat resultiert.

9. Verfahren nach einem der Ansprüche 1 bis 8, dadurch gekennzeichnet, daß man in die Zone (1) eine von einer konzentrierten Ammoniumnitratlösung gebildete flüssige Düngersubstanz einführt.

10. Verfahren nach Anspruch 9, dadurch gekennzeichnet, daß man auch eine Ammoniumphosphatbrühe einführt.

11. Verfahren nach einem der Ansprüche 1 bis 10, dadurch gekennzeichnet, daß man in den Granulator (1) eine von Harnstoff in Form einer konzentrierten Lösung oder in geschmolzenem Zustand gebildete flüssige Düngersubstanz einführt.

12. Verfahren nach Anspruch 11, dadurch gekennzeichnet, daß man auch eine Ammoniumphosphatbrühe einführt.

13. Verfahren nach einem der Ansprüche 1 bis 12, dadurch gekennzeichnet, daß man unter dem Produktbett in der Zone (1) Ammoniak einspritzt.

14. Verfahren nach einem der Ansprüche 1 bis 8 zur Herstellung von granuliertem Diammonphosphat mit einem Atomverhältnis N/P zwischen 1,81 und 1,85, dadurch gekennzeichnet, daß man in die Zone (1) eine ungefähr der 3-fachen Produktion entsprechende Menge an rückgeführtem getrockneten Produkt einführt, daß man den Strom an Phosphorsäure einer Konzentration zwischen 42 und 50 % $P_2O_5$ in zwei im wesentlichen gleiche Teile teilt, daß man in zwei rohrförmigen, die Zonen (1) und (2) beliefernden Reaktoren die beiden Teile durch Ammoniak bis auf ein Atomverhältnis N/P von 1,2 bis 1,5 neutralisiert, und daß man unter dem Produktbett in der Zone (1) Ammoniak einspritzt, um in dem die Zone (1) verlassenden Produkt ein Atomverhältnis N/P von 1,9 bis 2 zu erhalten.

15. Verwendung einer Vorrichtung zur Durchführung des Verfahrens nach einem der Ansprüche 1 bis 14, dadurch gekennzeichnet, daß die Vorrichtung einen Granulierkreis aufweist, der in Reihe eine Granuliertrommel (1) und eine drehbare Trockentrommel (2) umfaßt, die mit inneren Flügeln ausgerüstet ist, die das Produkt anheben und in einem Regen in den heißen Gasstrom niederfallen lassen, und mit einem in die Trommel (2) mündenden rohrförmigen Reaktor (5) ausgestattet ist.

16. Verwendung nach Anspruch 15, dadurch gekennzeichnet, daß die Trommel (1) ebenso mit einem rohrförmigen Neutralisationsreaktor sowie mit einer Einrichtung zum Einspritzen von Ammoniak in das Produktbett ausgerüstet ist.

17. Verwendung nach Anspruch 15 oder 16, dadurch gekennzeichnet, daß die Strahlachse des rohrförmigen Reaktors (5) im wesentlichen parallel zur Achse des drehbaren Trockners ist.